## Europäisches Patentamt

## European Patent Office

## Office européen des brevets

(19)

(11) Veröffentlichungsnummer : **0 210 361**
**B1**

(12) **EUROPÄISCHE PATENTSCHRIFT**

(45) Veröffentlichungstag der Patentschrift :
17.05.89

(21) Anmeldenummer : 86106779.1

(22) Anmeldetag : 17.05.86

(51) Int. Cl.⁴ : **F 21 V 19/00, H 01 J 61/32**

(54) **Kompakt-Leuchtstofflampe.**

(30) Priorität : 17.07.85 DE 8520588 U

(43) Veröffentlichungstag der Anmeldung :
04.02.87 Patentblatt 87/06

(45) Bekanntmachung des Hinweises auf die Patenterteilung : 17.05.89 Patentblatt 89/20

(84) Benannte Vertragsstaaten :
AT BE DE FR IT NL SE

(56) Entgegenhaltungen :
DE-A- 2 707 438
GB-A- 2 072 942
PATENTS ABSTRACTS OF JAPAN, Band 9, Nr. 89 (E-309)[1812], 18. April 1985; & JP-A-59 219 848 (HITACHI SEISAKUSHO K.K.) 11-12-1984
PATENTS ABSTRACTS OF JAPAN, Band 9, Nr. 61 (E-303)[1784], 19. März 1985; & JP-A-59 198 651 (MITSUBISHI DENKI K.K.) 10-11-1984

(73) Patentinhaber : **Lindner Licht GmbH**
**Hohmannstr. 3**
**D-8600 Bamberg (DE)**

(72) Erfinder : **Leither, Helmut**
**Veit-Stross-Strasse 5**
**D-8620 Lichtenfels (DE)**

(74) Vertreter : **Tergau, Enno et al**
**Patentanwälte Tergau & Pohl Postfach 11 93 47**
**Hefnersplatz 3**
**D-8500 Nürnberg 11 (DE)**

EP 0 210 361 B1

## Beschreibung

Die Erfindung betrifft eine Kompakt-Leuchtstofflampe mit den im Oberbegriff des Anspruches 1 aufgeführten Merkmalen.

Es ist eine derartige Kompakt-Leuchtstofflampe aus der GB-A-2 072 942 bekannt, die als Ersatz für herkömmliche Glühlampen, jedoch mit höherer Lichtleistung und längerer Lebensdauer, in normale Schraubfassungen, beispielsweise in eine E27-Fassung, einsetzbar ist. Derartige Kompakt-Leuchtstofflampen benötigen funktionsbedingt entsprechende Starter und Vorschaltgeräte für den betrieb der Leuchtstoffröhre. Diese Geräte sind beispielsweise zwischen den vier in einem Viereck angeordneten Schenkeln eines doppel-U-förmigen Leuchtrohres auf einer Trägerplatte innerhalb des Lampensockels montiert.

Als Abdeckung für die relativ komplizierte Trägerplatte solcher Kompakt-Leuchtstofflampen dient eine durch zwei Kappenteile gebildete Kunststoffkappe, die den Lampensockel bildet. Um das klotzartige Vorschaltgerät nach außen zu verbergen, ist über dieses und das Leuchtrohr ein Glaszylinder geschoben, der mit seiner schraubsockelseitigen Öffnung in die Offenseite des Lampensockels eingesetzt ist. Der Glaszylinder selbst ist zur Erzeugung eines optischen Lichtstreueffektes an seiner Außenwandung geriffelt. Derartige Kompakt-Leuchtstofflampen werden wegen ihres technischen Aussehens aus geschmacklichen Gründen vielfach abgelehnt. Es ist daher bereits vorgeschlagen worden, eine Kompakt-Leuchtstofflampe der eingangs beschriebenen Art gefälliger dadurch auszugestalten, daß der Hüllkörper etwa eine Kugelform aufweist. Allerdings ist dieser Hüllkörper auch aus maschinengefertigtem Glas hergestellt. Diese Kompakt-Leuchtstofflampe ist ästhetisch ebenfalls unbefriedigend gestaltet insoweit, als der Lampensockel zur Halterung des Lampenglases zwischen seiner schraubsockelseitigen konischen Einschnürung und der Glaskugel einen deutlich sichtbaren, zylindrischen Absatz aufweist. Dieser zylindrische Absatz ist bei dieser Konstruktion notwendig, weil das maschinengefertigte Lampenglas im Einführungsbereich des Leuchtrohres mit einer nach außen wirksamen, ringförmigen Hinterschneidung versehen ist, die durch eine nach innen stehende Ringwulst am freien Stirnende der Zylinderringwandung übergriffen wird.

Der Erfindung liegt demgegenüber die Aufgabe zugrunde, mit den Kernteilen der eingangs beschriebenen, herkömmlichen Kompakt-Leuchtstofflampe, nämlich mit deren unverändertem Lampensockel und Leuchtrohr eine Kompakt-Leuchtstofflampe mit gefälligerem, ästhetischem Aussehen zu schaffen. Wichtig ist, daß der Standard-Lampensockel und die Standard-Bauteile zum technischen Betrieb der Kompakt-Leuchtstofflampe unverändert verwendbar sind.

Die vorgenannte Aufgabe wird gelöst durch die im Kennzeichen des Anspruches 1 aufgeführten Merkmale. Der Außenkonus des Adapters ist dabei so gestaltet, daß er optisch eine Fortsetzung des Außenkonusteiles des Lampensockels bildet. Dieser Außenkonus des Adapters wird dann direkt an den Hüllkörper herangeführt.

Weiterhin soll die Kompakt-Leuchtstofflampe auch dazu geeignet sein, als Hüllkörper ein geblasenes Lampenglas ohne die ästhetisch störenden Form- und Pressnähte von maschinengefertigtem Glas verwenden zu können. Solche geblasenen Lampengläser haben auch den Vorteil der geringeren Wandstärke und damit des geringeren Gewichts. Es lassen sich allerdings im Blasverfahren die Einführungsöffnungen für den Lampensockel nicht genau maßhaltig herstellen. Vielmehr müssen dort erhebliche Toleranzabweichungen in Kauf genommen werden. Diese Rahmenbedingungen stellen wiederum besondere Anforderungen an den Erfindungsgegenstand, die durch die Lehre des Anspruches 2 gelöst werden.

Ist der Hüllkörper etwa eine Kugel, so wird der Außenkonus des Adapters etwa tangential an die sphärische Wand des Hüllkörpers herangeführt. Dadurch wird ein gleitender Übergang des Lampenumrisses von dem Außenkonus des Adapters in die sphärische Wand des Hüllkörpers bzw. Lampenglases gewährleistet.

Die großen Toleranzabweichungen bei mundgeblasenem Leuchtenglas erzwingen eine Steckfixierung des Lampenglases von der Innenseite seines Ringrandes bzw. seiner Einschnürung her, die die Einführungsöffnung des Hüllkörpers bzw. Lampenglases für das Leuchtrohr bilden. Durch den Adapter ist es möglich, den Hüllkörper bzw. das Lampenglas einfach auf den tragenden Teil der Lampe durch axiale Verschiebung in Richtung der Lampenachse aufzuschnappen. Diese Schnappverbindung gleicht auch die unerlässlichen Toleranzabweichungen im Einschnürungsbereich eines mundgeblasenen Lampenglases aus.

Durch das Kennzeichnungsmerkmal des Anspruches 3 bringt der Adapterwerkstoff eine gewisse Eigenelastizität mit, wie si für das Zustandekommen einer solchen Schnappverbindung in größeren Toleranzbereichen notwendig ist und noch durch die weiteren Formmerkmale beispielsweise der Haltezungen für den Hüllkörper bzw. das Lampenglas unterstützt wird. Außerdem wird durch die optischen Wirkungen ein einheitlicher Konusbereich geschaffen.

Durch das Kennzeichnungsmerkmal des Anspruches 4 erhält der Adapter eine genaue Zentrierung gegenüber dem Lampensockel. Außerdem begünstigen die großen Kontaktflächen zwischen dem zylindrischen Teil des Lampensockels und der Zylinderringwand des Adapters eine gute abschließende Klebeverbindung.

Durch das Kennzeichnungsmerkmal des Anspruches 5 erhält der Adapter eine geeignete Ausbildung für die Aufnahme auch mundgeblasener Lampengläser, bei denen die Einschnürung auch aus Festigkeitsgründen in eine schraubsockelseitige, zylindrische Tülle übergeht.

Durch das Kennzeichnungsmerkmal des Anspruches 6 wird der bereits vorher als angestrebt erwähnte gleitende Übergang von der Konusringwand des Adapters in die Kugel des Hüllteiles erzielt. Durch das Kennzeichnungsmerkmal des Anspruches 7 ist im Übergangsbereich nur eine minimal erkennbare Teilfuge vorhanden. Demselben Zweck dient das Kennzeichnungsmerkmal des Anspruches 8.

Durch das Kennzeichnungsmerkmal des Anspruches 9 läßt sich der Adapter von der schraubsockelabseitigen Seite des Lampensockels her einfach auf diesen in seine gewollte Endstellung überführen. In dieser Endstellung kann auch eine Schnappfixierung zwischen Adapter und Lampensockel vorgesehen sein, wie sie Gegenstand des Kennzeichens des Anspruches 10 ist.

Das Kennzeichnungsmerkmal des Anspruches 11 gewährleistet einen gleichmäßig zentrierten Sitz des Hüllkörpers bzw. Lampenglases.

Durch das Kennzeichnungsmerkmal des Anspruches 12 ist gewährleistet, daß die Haltevorsprünge 11 einen weiten Spreizbereich überstreichen können und damit den hohen Anforderungen an einen großen Toleranzbereich der Abmessungen der Lampenglas-Einschnürung bzw. der Lampenglas-Einführungsöffnung angepaßt sind.

Das Kennzeichnungsmerkmal des Anspruches 13 hat eine besondere Bedeutung für den festen Sitz des mit dem Hüllkörper versehenen Adapters auf dem Lampensockel. Es wird nämlich bei der Montage zunächst der Adapter in den Hüllkörper eingeschoben, wobei die Haltezungen zunächst nur einen relativ lockeren Sitz des Adapters am Hüllkörper ermöglichen. Dieser lockere Sitz erleichtert auch ein zerstörungsfreies Einführen des Adapters zunächst in den vorzugsweise aus dünnem Glas bestehenden Hüllkörper. Wird nun der Lampensockel in den Adapter eingeführt, so bewirken die Innenvorsprünge eine radial nach außen gerichtete Auslenkbewegung auf die Haltezungen, deren Haltevorsprünge nunmehr in eine verstärkte Hintergriffstellung gegenüber dem Öffnungsrand des Hüllkörpers verschoben werden und dabei eine feste Verriegelung herstellen. Durch das Kennzeichnungsmerkmal des Anspruches 14 ist diese Verriegelung wieder innerhalb eines großen Toleranzbereiches möglich, weil der Haltevorsprung der Haltezungen um den Anlagepunkt des jeweiligen Innenvorsprungs am Lampensockel 13 elastisch verschwenkbar ist, wie dies durch die großen Abmessungstoleranzen der Einführungsöffnungen der Hüllkörper erforderlich werden kann. In jedem Falle bewirkt das Einschieben des Lampensockels in den Adapter bei der Montage einen unlösbaren Hintergriff der Haltevorsprünge hinter den Öffnungsrand des Hüllkörpers, wie er ohne eine solche nachträgliche, radial nach außen gerichtete Verschiebung bei aus dünnen Glas hergestellten Hüllkörpern ohne eine erhebliche Zerstörungsgefahr nicht möglich wäre. Im Endzustand der Verriegelung der Haltevorsprünge übt der Adapter über den Innenvorsprung eine permanente Vorspannung auf die jeweilige Haltezunge aus.

Das Kennzeichnungsmerkmal des Anspruches 15 erleichtert das Aufschieben des Hüllkörpers bzw. Lampenglases auf die Haltezungen. Die Kennzeichnungsmerkmale der Ansprüche 16 und 17 kommen dem Umstand entgegen, daß gerade bei mundgeblasenen Lampengläsern der Übergang zwischen Einschnürung und Tülle zwar um etwa 90° ausgerundet, jedoch nicht maßhaltig ist. Dieses Merkmal ist dazu geeignet, trotzdem in jedem Falle eine gute Halterung des Lampenglases zu gewährleisten.

Durch die Kennzeichnungsmerkmale der Ansprüche 19 und 20 ist eine gute Zentrierung des Hüllkörpers gegenüber dem Lampensockel gewährleistet. Das Kennzeichnungsmerkmal des Anspruches 21 dient dazu, nach der Fertigung der erfindungsgemäßen Kompakt-Leuchtstofflampe sicherzustellen, daß diese nicht zerstörungsfrei in ihre Einzelteile zerlegt werden kann. Es dient dies der Bedienungssicherheit des Erfindungsgegenstandes.

Der Gegenstand der Erfindung wird anhand der Figuren beispielsweise erläutert. Es zeigen :

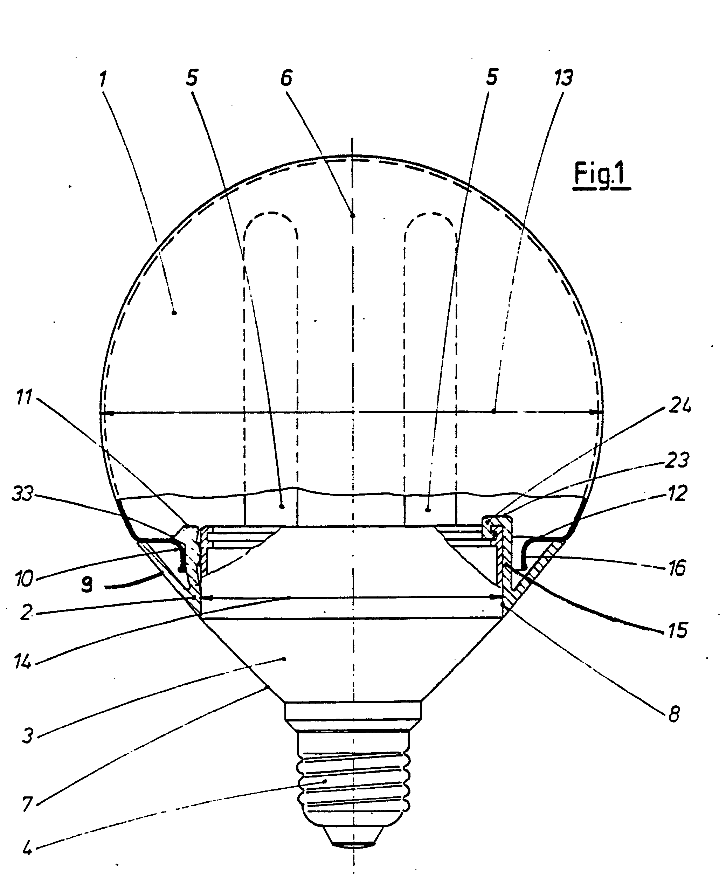

Fig. 1   eine Seitenansicht der kompletten Kompakt-Leuchtstofflampe teilweise im Längsschnitt.

Fig. 2   eine vergrößerte Teildarstellung aus Fig. 1.

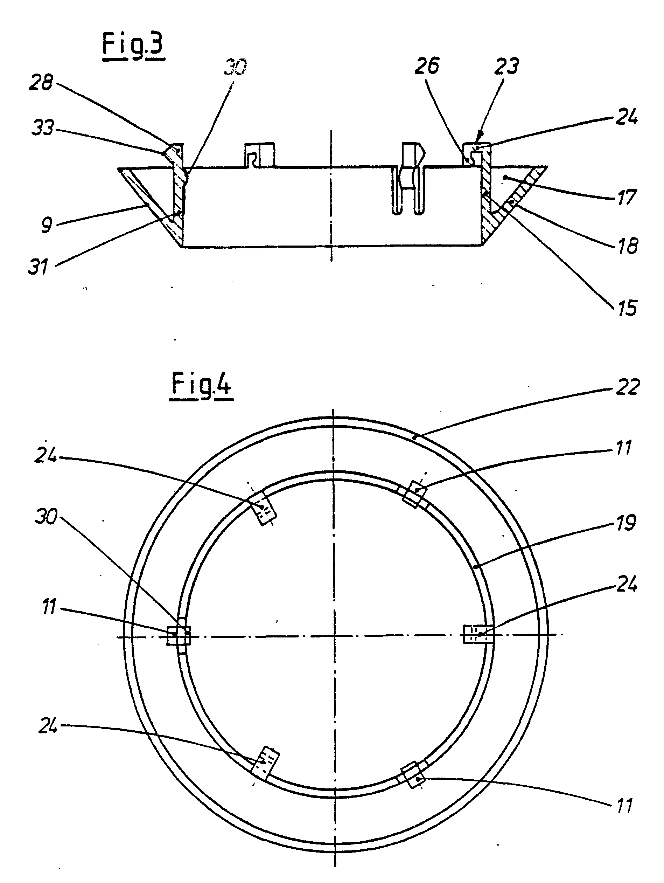

Fig. 3   einen Schnitt durch den Adapter entsprechend Fig. 4.

Fig. 4   eine Draufsicht auf den Adapter entsprechend Fig. 3.

Die Kompakt-Leuchtstofflampe besteht im wesentlichen aus dem Hüllkörper 1, dem Adapter 2 und dem Lampensockel 3. Der Lampensockel 3 ist mit einem lampenüblichen Schraubsockel 4 zum Einschrauben in übliche Lampenfassungen versehen. Der Lapensockel umfaßt die Tragvorrichtung (nicht gezeigt) für das Vorschaltgerät (nicht gezeigt) und das Leuchtrohr 5, welches doppel-U-förmig ausgebildet und dabei zu vier in einem Viereck angeordneten, zur Lampenachse 6 parallelen Schenkeln gebogen ist.

Der Lampensockel 3 weist schraubsockelseitig eine sich konisch in Richtung auf das Leuchtrohr 5 erweiternde Umfangsform (Außenkonus 7) auf. Anschließend geht er in eine zylindrische Umfangsform (Zylinderumfang 8) über.

Der Lampensockel 3 trägt den an seinem Zylinderumfang 8 anliegenden, ringförmigen Adapter 2. Die Außenoberfläche des Adapters 2 ist als Außenkonus 9 kegelstumpfförmig ausgebildet. Der Kegelwinkel ist dem Kegelwinkel des Außenkonus 7 des Lampensockels 3 angenähert. In seinem am Zylinderumfang 8 des Lampensockels 3 anliegenden Bereich ist der Adapter 2 mit den Öffnungsrand 10 des Hüllkörpers 1 von innen her hintergreifenden Haltevorsprüngen 11 versehen. Dabei ist der Öffnungsrand 10 des Hüllkörpers 1 durch eine sich schraubsockelseitig an den kugelschalenähnlich gekrümmten Hüllkörperbereich anschließende Einschnürung 12 gebildet.

Der außerhalb des Lampensockels 3 liegende Teil des Hüllkörpers 1 ist kugelschalenähnlich bzw. birnenähnlich gekrümmt. Der größte Durchmesser 13 des Hüllkörpers 1 ist wesentlich größer als der maximale Durchmesser 14 des Lampensockels 3.

Der Adapter 2 ist ein Kunststoffspritzteil. Er liegt mit einer weitgehend in Umfangsrichtung ununterbrochenen, inneren Zylinderringwand 15 am Zylinderumfang 8 des Lampensockels 3 an. Die Einschnürung 12 des Hüllkörpers 1 geht schraubsockelseitig in eine etwa zylindrische Tülle 16 über. Sie steht mit dieser Tülle 16 in einen Zwischenraum 17 zwischen der Zylinderringwand 15 und der den Außenkonus 9 tragenden Konusringwand 18 des Adapters 2 hinein.

Die Konusringwand 18 stößt mit ihrem oberen Ende 19 von außen an den Übergang 20 zwischen Kugelteil 21 und Einschnürung 12 an. Die Berührungskante 22 zwischen Konusringwand 18 und Hüllkörper 1 weist eine zur Hüllkörperoberfläche in diesem Bereich etwa Komplementäre Oberflächenform auf. Die Berührungskante 22 bildet insbesondere eine zur Lampenachse 6 rechtwinklige Ringfläche.

An das freie Stirnende 23 der Zylinderringwand 15 des Adapters 2 sind radial nach innen stehende Anlagevorsprünge 24 für die Anlage an der freien Ringkante 25 des Zylinderumfanges 8 des Lampensockels 3 angeformt, die die Ringkante 25 mit an ihrem Ende zur Schraubsockelseite hin stehenden Klammervorsprüngen 26 nach innen hin übergreifen. Mit diesen Klammervorsprüngen 26 umgreifen die Anlagevorsprünge 24 eine nach innen stehende Ringwulst 27 zu einer verrastenden Formschlußverbindung. Die innere Ringwulst 27 ist am freien Stirnende 23 der Zylinderringwand 15 angeformt. Es ist eine ungerade Zahl von Anlagevorsprüngen 24 vorhanden, die gleichmäßig über das Stirnende 23 der Zylinderringwand 15 verteilt sind. Die Haltevorsprünge 11 sind am Freiende von aus der Zylinderringwand 15 des Adapters 2 ausgesparten, axialen Haltezungen 28 angeordnet. Die Haltezungen 28 sind mit einem an ihren der Lampenachse 6 zugewandten Innenseiten 29 angebrachten Innenvorsprung 30 versehen, der bei radial einwärts ausgelenkter Haltezunge 28 am Zylinderumfang 8 des Lampensockels 3 abstützbar ist. Der Innenvorsprung 30 ist zwischen dem Fußteil 31 und dem Haltevorsprung 11 der Haltezungen 28 angeordnet. Die Haltevorsprünge 11 sind an ihrer hüllkörperseitigen Oberfläche mit Auflaufschrägen 32 für die Einschnürung 122 bzw. die Stirnkante der Tülle 16 versehen.

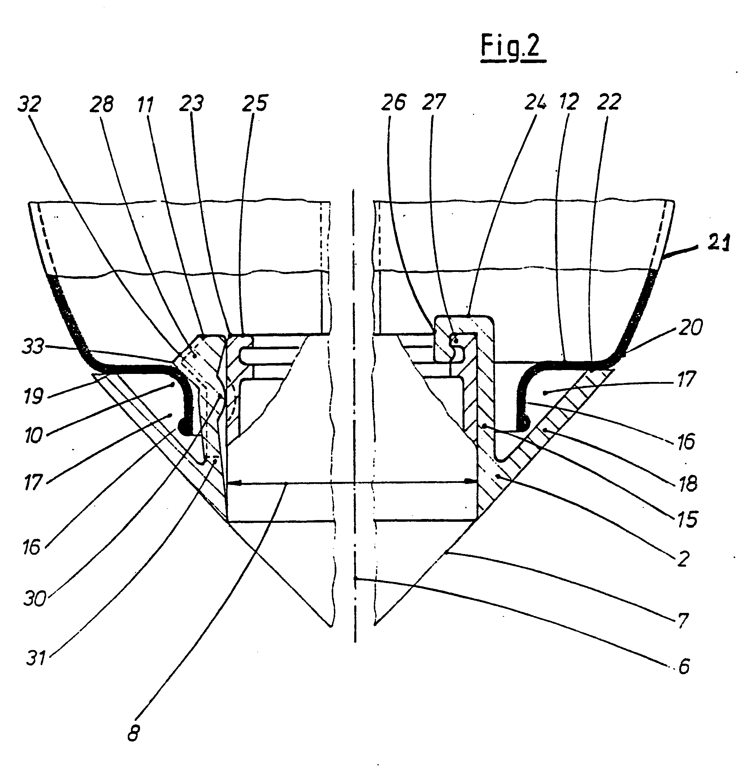

Die Haltevorsprünge 11 weisen eine V-förmige Querschnittsform mit etwa radial zur Lampenachse 6 nach außen stehendem V-Scheitel 33 auf. Die beiden V-Schenkel bilden einen Winkel von etwa 90°. Die Haltevorsprünge 11 greifen im Bogenbereich zwischen Einschnürung 12 und Tülle 16 am Hüllkörper 1 an (Fig. 2). Es ist eine ungerade Zahl von Haltevorsprüngen 11 vorhanden, die gleichmäßig über den Umfang des Adapters 2 verteilt sind. Insbesondere sind drei Haltevorsprünge 11 vorhanden. Die Haltezungen 28 und Anlagevorsprünge 24 sind abwechselnd gleichmäßig über den Adapterumfang verteilt.

Zwischen Lampensockel 3, Adapter 2 und/oder Hüllkörper 1 kann eine Klebeverbindung vorhanden sein.

Zur Montage der Kompakt-Leuchtstofflampe wird zunächst der Adapter 2 mit seinen Haltezungen 28 in die Öffnung des Hüllköpers 1 eingeschoben. Dabei verrasten die Haltevorsprünge 11 der Haltezungen 28 locker hinter dem Öffnungsrand 10 des Hüllkörpers 1. Es liegt noch keine lagesichere Verbindung zwischen Hüllkörper 1 und Adapter 2 vor. Sodann wird der Lampensockel 3 in den Adapter 2 von dessen Außenseite her in die Montageendstellung bis zum axialen Anschlag (Anlagevorsprung 24) eingeschoben. Gemeinsam mit der Ringwulst 27 ergibt sich eine leichte Verrastung zwischen Lampensockel 3 und Adapter 2. Mit der Beaufschlagung des Innenvorsprunges 30 der Haltezungen 28 durch den Umfang des Lampensockels 3 werden die Haltezungen 28 radial nach außen um das Fußteil 31 geschwenkt. Dabei geraten die Haltevorsprünge 11 in eine fest anliegende, verstärkte Hintergriffstellung am Öffnungsrand 10. Dadurch wiederum ist der Hüllkörper 1 nunmehr definitiv fest mit dem Adapter 2 verriegelt und kann zerstörungsfrei nicht mehr vom Adapter 2 abgezogen werden. Vor dem Einführen des Lampensockel 3 in den Adapter 2 sind die gegenseitigen Kontaktflächen mit einem Kleber versehen, der nach erfolgter Endmontage aushärtet und damit zusätzlich noch eine Verdrehsicherung zwischen Lampensockel 3 und Adapter 2 herstellt. Ebenfalls sind die Haltevorsprünge 11 der Haltezungen 28 vor der Verbindung des Adapters 2 mit dem Hüllkörper 1 mit einem Klebstoff versehen, der nach der Endmontage aushärtet und damit eine Verdrehsicherung zwischen Adapter 2 und Hüllkörper 1 herstellt. Diese gegenseitigen Verdrehsicherungen zwischen Hüllkörper 1, Adapter 2 und Lampensockel 3 ermöglichen es, die Kompakt-Leuchtstofflampe im späteren Gebrauch durch Aufbringung des Drehmomentes auf den Hüllkörper genauso in eine Lampenfassung ein- oder aus dieser herauszuschrauben, wie dies von einer Glühlampe her allgemein bekannt ist.

Bezugszeichen

1 Hüllkörper
2 Adapter
3 Lampensockel
4 Schraubsockel
5 Leuchtrohr
6 Lampenachse
7 Außenkonus
8 Zylinderumfang
9 Außenkonus
10 Öffnungsrand
11 Haltevorsprung
12 Einschnürung
13 maximaler Durchmesser
14 maximaler Durchmesser
15 Zylinderringwand
16 Tülle
17 Zwischenraum

18 Konusringwand
19 oberes Ende
20 Übergang
21 Kugelteil
22 Berührungskante
23 Stirnende
24 Anlagevorsprung
25 Ringkante
26 Klammervorsprung
27 Ringwulst
28 Haltezunge
29 Innenseite
30 Innenvorsprung
31 Fußteil
32 Auflaufschräge
33 V-Scheitel

**Patentansprüche**

1. Kompakt-Leuchtstofflampe
mit einem lampenüblichen Schraubsockel (4),
mit einem auf den Schraubsockel (4) aufgesetzten Lampensockel (3), welcher
schraubsockelseitig einen sich konisch in Richtung auf das Leuchtrohr (5) erweiternden Außenkonus (7) und
anschließend einen Zylinderumfang (8) aufweist,
und mit einem an das zylindrische Ende des Lampensockels (3) anschließenden Hüllkörper (1) aus lichtdurchlässigem Werkstoff, insbesondere aus Glas, dadurch gekennzeichnet, daß der Lampensockel (3) einen an seinem Zylinderumfang (8) anliegenden, ringförmigen Adapter (2) trägt, dessen Außenoberfläche als Außenkonus (9) kegelstumpfförmig ausgebildet ist, eine Fortsetzung des Außenkonus (7) des Lampensockels (3) bildet und bis an den Hüllkörper herangeführt ist.

2. Leuchtstofflampe nach Anspruch 1, dadurch gekennzeichnet, daß der Adapter (2) in seinem am Zylinderumfang (8) des Lampensockels (3) anliegenden Bereich den Öffnungsrand des Hüllkörpers (1) von innen her hintergreifende Haltevorsprünge (11) aufweist und der Öffnungsrand (10) des Hüllkörpers (1) durch eine sich schraubsockelseitig an den von außen frei sichtbaren Hüllkörperbereich anschließende Einschnürung (12) gebildet ist.

3. Leuchtstofflampe nach Anspruch 1 oder 2, dadurch gekennzeichnet, daß der Adapter (2) ein Kunststoffspritzteil, vorzugsweise aus dem Werkstoff des Lampensockels (3) und mit seiner Farbe ist.

4. Leuchtstofflampe nach einem oder mehreren der vorhergehenden Ansprüche, dadurch gekennzeichnet, daß der Adapter (2) mit einer weitgehend ununterbrochenen Zylinderringwand (15) am Zylinderumfang (8) des Lampensockels (3) anliegt.

5. Leuchtstofflampe nach Anspruch 4, dadurch gekennzeichnet, daß die Einschnürung (12) des Hüllkörpers (1) schraubsockelseitig ein eine etwa zylindrische Tülle (16) übergeht und mit dieser Tülle (16) in einen Zwischenraum (17) zwischen der Zylinderringwand (15) und der den Aussenkonus (9) tragenden Konusringwand (18) der Adapters (2) hineinsteht.

6. Leuchtstofflampe nach einem oder mehreren der vorhergehenden Ansprüche, dadurch gekennzeichnet, daß die Konusringwand (18) mit ihrem oberen Ende (19) von außen an den Übergang (20) zwischen dem von außen frei sichtbaren Teil (21) und Einschnürung (12) des Hüllkörpers (1) anstößt.

7. Leuchtstofflampe nach Anspruch 6, dadurch gekennzeichnet, daß die Berührungskante (22) zwischen Konusringwand (18) und Hüllkörper (1) eine zur Hüllkörperoberfläche in diesem Bereich etwa komplementäre Oberflächenform aufweist.

8. Leuchtstofflampe nach Anspruch 7, dadurch gekennzeichnet, daß die Berührungskante (22) eine zur Lampenachse (6) rechtwinklige Ringfläche bildet.

9. Leuchtstofflampe nach einem oder mehreren der vorhergehenden Ansprüche, dadurch gekennzeichnet, daß an das freie Stirnende (23) der Zylinderringwand (15) des Adapters (2) radial nach innenstehende Anlagevorsprünge (24) für die Anlage an der freien Ringkante (25) des Zylinderumfangs (8) des Lampensockels (3) angeformt sind, wobei die Anlagevorsprünge (24) die Ringkante (25) mit Klammervorsprüngen (26) nach innen hin übergreifen.

10. Leuchtstofflampe nach Anspruch 9, dadurch gekennzeichnet, daß die Anlagevorsprünge (24) zu einer verrastenden Formschlußverbindung um eine am freien Stirnende (23) der Zylinderringwand (15) angeordnete, radial nach innen stehende Ringwulst (27) herumgreifen.

11. Leuchtstofflampe nach Anspruch 9 oder 10, gekennzeichnet durch eine ungerade Zahl, insbesondere durch drei gleichmäßig über das Stirnende (23) der Zylinderringwand (15) verteilte Anlagevorsprünge (24).

12. Leuchtstofflampe nach einem oder mehreren der vorhergehenden Ansprüche, dadurch gekennzeichnet, daß die Haltevorsprünge (11) am Freiende von aus der Zylinderringwand (15) des Adapters (2) ausgesparten, axialen Haltezungen (28) angeordnet sind.

13. Leuchtstofflampe nach Anspruch 12, dadurch gekennzeichnet, daß die Haltezungen (28) mit einem an ihrer der Lampenachse (6) zugewandten Innenseiten (29) angebrachten Innenvorsprung (30) versehen sing, der am Zylinderumfang (8) des Lampensockels (3) abstützbar ist.

14. Leuchtstofflampe nach Anspruch 13, dadurch gekennzeichnet, daß der Innenvorsprung (30) zwischen dem Fußteil (31) und dem Haltevorsprung (11) der Haltezungen (28) angeordnet ist.

15. Leuchtstofflampe nach einem oder mehreren der vorhergehenden Ansprüche, dadurch gekennzeichnet, daß die Haltevorsprünge (11) an ihrer hüllkörperseitigen Oberfläche mit Auflufschrägen (32) für die Einschnürung des Hüllkörpers (1) versehen sind.

16. Leuchtstofflampe nach Anspruch 15, dadurch gekennzeichnet, daß die Haltevorsprünge (11) eine V-förmige Querschnittsform mit etwa radial zur Lampenachse (6) nach außen stehendem V-Scheitel (33) aufweisen.

17. Leuchtstofflampe nach Anspruch 16, dadurch gekennzeichnet, daß die V-Schenkel einen Winkel von etwa 90° miteinander bilden.

18. Leuchtstofflampe nach einem oder mehreren der vorhergehenden Ansprüche, dadurch gekennzeichnet, daß die Haltevorsprünge (11) im Bogenbereich zwischen Einschnürung (12) und Tülle (16) am Hüllkörper (1) angreifen.

19. Leuchtstofflampe nach einem oder mehreren der vorhergehenden Ansprüche, gekennzeichnet durch eine ungerade Zahl, insbesondere durch drei gleichmäßig über den Umfang des Adapters (2) verteilte Haltevorsprünge (11).

20. Leuchtstofflampe nach einem oder mehreren der vorhergehenden Ansprüche, dadurch gekennzeichnet, daß die Haltezungen (28) und Anlagevorsprünge (24) einander abwechselnd gleichmäßig über den Adapterumfang verteilt sind.

21. Leuchtstofflampe nach einem oder mehreren der vorhergehenden Ansprüche, gekennzeichnet durch eine abschließende Klebeverbindung zwischen Lampensockel (3) und Adapter (2) und/oder Hüllkörper (1).

22. Leuchtstofflampe nach einem oder mehreren der vorhergehenden Ansprüche, dadurch gekennzeichnet, daß der außerhalb des Lampensockels (3) liegende Teil des Hüllkörpers (1) kugelschalenähnlich gekrummt ist und sein größter Durchmesser (13) größer ist als der maximale Durchmesser (14) des Lampensockels (3).

**Claims**

1. A compact fluorescent bulb
    with a conventional screw base (4) for bulbs,
    with a bulb base (3) placed on the screw base (4) which bulb base has
        on the side of the screw base, an outer cone (7) conically expanding towards the fluorescent tube (5), and
        following on, a cylindrical periphery (8),
    and with a shell (1) made of a transparent material, in particular of glass, following on from the cylindrical end of the bulb base (3), characterized in that the bulb base (3) carries, adjoining its cylindrical periphery (8), an annular adapter (2) whose outer surface is formed frustoconically as an outer cone (9), forming an extension of the outer cone (7) of the bulb base (3), and which is carried as far as the shell.

2. A fluorescent bulb according to claim 1, characterized in that the adapter (2) has, in its zone adjoining the cylindrical periphery (8) of the bulb base (3), retaining projections (11) gripping the aperture rim (10) of the shell (1) from the inside from behind, and that the aperture rim (10) of the shell (1) is formed by a constriction (12) adjoining the shell zone freely visible from the outside, on the side of the screw base.

3. A fluorescent bulb according to claim 1 or 2, characterized in that the adapter (2) is a synthetic injection moulded part, preferably made of the material of the bulb base (3) and of the same colour.

4. A fluorescent bulb according to one or several of the preceding claims, characterized in that the adapter (2) fits, with a largely uninterrupted annular cylindrical wall (15), onto the cylindrical periphery (8) of the bulb base (3).

5. A fluorescent bulb according to claim 4, characterized in that the constriction (12) of the shell (1) passes on the side of the screw base (4) into an approximately cynlindrical mouthpiece (16) and projects with this mouthpiece (16) into a gap (17) between the annular cylindrical wall (15) and the annular conical wall (18) of the adapter (2), carrying the outer cone (9).

6. A fluorescent bulb according to one or several of the preceding claims, characterized in that the annular conical wall (18) abuts externally with its upper end (19) on the transition (20) between the part (21), freely visible from the outside, and the constriction (12) of the shell (1).

7. A fluorescent bulb according to claim 6, characterized in that the contact edge (22) between the annular conical wall (18) and the shell (1) has a surface shape which, in this zone, is approximately complementary to the shell surface.

8. A fluorescent bulb according to claim 7, characterized in that the contact edge (22) forms an annular surface which is orthogonal to the bulb axis (6).

9. A fluorescent bulb according to one or several of the preceding claims, characterized in that on the free front end (23) of the annular cylindrical wall (15) of the adapter (2), there are moulded on inwardly projecting bearing projections (24) for bearing on the free annular edge (25) of the cylindrical periphery (8) of the bulb base (3), the bearing projections (24) gripping the annular edge (25) with clasp projections (26) from the top towards the inside.

10. A fluorescent bulb according to claim 9, characterized in that the bearing projections (24) grip round an annular beading (27) extending radially inwards, arranged on the free front end (23) of the annular cylindrical wall (15) to form a form locking engagement connection.

11. A fluorescent bulb according to claim 9 or 10, characterized by an uneven number, three in particular, of bearing projections (24) uniformly distributed over the front end (23) of the annular cylindrical wall (15).

12. A fluorescent bulb according to one or several of the preceding claims, characterized in that the retaining projections (11) are arranged on the free end of axial retaining tongues (28) cut out of the annular cylindrical wall (15) of the adapter (2).

13. A fluorescent bulb according to claim 12, characterized in that the retaining tongues (28) are provided with an inner projection (30) arranged on their inner sides (29) facing the bulb axis (6), which projection can be supported on the cylindrical periphery (8) of the bulb base (3).

14. A fluorescent bulb according to claim 13, characterized in that the inner projection (30) is arranged between the foot (31) and the retaining projection (11) of the retaining tongues (28).

15. A fluorescent bulb according to one or several of the preceding claims, characterized in that the retaining projections (11) are, on their surface on the side of the shell, provided with bearing cants (32) for the constriction of the shell (1).

16. A fluorescent bulb according to claim 15, characterized in that the retaining projections (11) have a V-shaped cross section with the tip (33) of the V projecting outwards approximately radially towards the bulb axis (6).

17. A fluorescent bulb according to claim 16, characterized in that the sides of the V form an angle of approximately 90° with each other.

18. A fluorescent bulb according to one or several of the preceding claims, characterized in that the retaining projections (11) act on the shell (1) in the arcuate zone between the constriction (12) and the mouthpiece (16).

19. A fluorescent bulb according to one or several of the preceding claims, characterized by an uneven number, three in particular, of retaining projections (11) uniformly distributed over the periphery of the adapter (2).

20. A fluorescent bulb according to one or several of the preceding claims, characterized in that the retaining tongues (28) and the bearing projections (24) are uniformly distributed over the periphery of the adapter (2), alternating with each other.

21. A fluorescent bulb according to one or several of the preceding claims, characterized by an adhesive sealing joint between the bulb base (3) and the adapter (2) and/or the shell (1).

22. A fluorescent bulb according to one or several of the preceding claims, characterized in that the part of the shell (1) lying outside the bulb base (3) is curved in the manner of a spherical shell, and that its largest diameter is larger than the maximum diameter (14) of the bulb base (3).

**Revendications**

1. Lampe fluorescente compacte
   avec un culot de lampe fileté (4) usuel,
   avec une embase de lampe (3) qui est montée sur le culot fileté (4) et présente
   côté culot fileté, un cône extérieur (7) dont l'élargissement conique est dirigé vers le tube fluorescent (5) et,
   se raccordant à ce cône, une périphérie cylindrique (8),
   et avec un corps-enveloppe (1) en matière laissant passer la lumière, notamment en verre, se raccordant à l'extrémité cylindrique de l'embase (3), caractérisée par le fait que l'embase (3) porte un adaptateur annulaire (2) qui est adjacent à la périphérie cylindrique (8) de cette embase et
   dont la surface extérieure de forme tronconique présente un cône extérieur (9) qui forme un prolongement du cône extérieur (7) de l'embase (3) et va jusqu'au corps-enveloppe.

2. Lampe fluorescente selon revendication 1, caractérisée par le fait que l'adaptateur (2) présente, dans sa région adjacente à la périphérie cylindrique (8) de l'embase (3), des saillants de retenue (11) venant se placer par l'intérieur derrière le bord de l'ouverture du corps-enveloppe (1), et le bord (10) de l'ouverture du corps-enveloppe (1) est constitué par un étranglement (12) qui se raccorde, côté culot fileté, à la région du corps-enveloppe visible de l'extérieur.

3. Lampe fluorescente selon revendication 1 ou 2, caractérisée par le fait que l'adaptateur (2) est une pièce en matière plastique moulée par injection, de préférence faite de la même matière que l'embase (3) et ayant la couleur de celle-ci.

4. Lampe fluorescente selon une ou plusieurs des revendications précédentes, caractérisée par le fait que l'adaptateur (2) s'applique sur la périphérie cylindrique (8) de l'embase (3) par une paroi annulaire cylindrique (15) sensiblement ininterrompue.

5. Lampe fluorescente selon revendication 4, caractérisée par le fait que, côté culot fileté, l'étranglement (32) du corps-enveloppe (1) prend la forme d'une douille (16) sensiblement cylindrique par laquelle il s'engage et se tient dans un espace intermédiaire (17) entre la paroi cylindrique annulaire (15) et la paroi conique annulaire (18) de l'adaptateur (2) portant le cône extérieur (9).

6. Lampe fluorescente selon une ou plusieurs des revendications précédentes, caractérisée par le fait que, par son extrémité supérieure (19), la paroi annulaire conique (18) est extérieurement en aboutement contre la transition (20) entre la partie (21) visible de l'extérieur et l'étranglement (12) du corps-enveloppe (1).

7. Lampe fluorescente selon revendication 6, caractérisé par le fait que le bord de contact (22) entre paroi annulaire conique (18) et corps-enveloppe (1) présente dans cette région une forme de surface sensiblement complémentaire de la surface du corps-enveloppe (1).

8. Lampe fluorescente selon revendication 7, caractérisée par le fait que le bord de contact (22) forme une surface annulaire orthogonale à l'axe (6) de la lampe.

9. Lampe fluorescente selon une ou plusieurs des revendications précédentes, caractérisée par le fait que des saillants d'appui (24), disposés radialement vers l'intérieur, pour l'appui contre le bord annulaire libre (25) de la périphérie cylindrique (8) du culot de lampe (3), sont formés sur l'extrémité frontale libre (23) de la paroi cylindrique annulaire (15) de l'adaptateur (2), ces saillants (24) recouvrant vers l'intérieur le bord annulaire (25) par des reliefs de retenue (26).

10. Lampe fluorescente selon revendication 9, caractérisée par le fait que, pour constituer une liaison positive, les saillants d'appui (24) chevauchent un bourrelet annulaire (27) agencé sur l'extrémité frontale libre (23) de la paroi cylindrique annulaire (15) et dirigé radialement vers l'intérieur.

11. Lampe fluorescente selon revendication 9 ou 10, caractérisée par un nombre impair de saillants d'appui (24), ceux-ci étant notamment au nombre de trois et étant régulièrement répartis sur l'extrémité frontale (23) de la paroi cylindrique annulaire (15).

12. Lampe fluorescente selon une ou plusieurs des revendications précédentes, caractérisée par le fait que les saillants de retenue (11) sont agencés à l'extrémité libre de languettes de retenue axiales (28) aménagées sur la paroi annulaire cylindrique (15) de l'adaptateur (2).

13. Lampe fluorescente selon revendication 12, caractérisée par le fait que les languettes de retenue (28) sont munies d'un relief intérieur (30) qui est agencé sur leur côté intérieur (29) tourné vers l'axe (6) de la lampe et qui peut prendre appui contre la périphérie cylindrique (8) de l'embase (3).

14. Lampe fluorescente selon revendication 13, caractérisée par le fait que le relief intérieur (30) est situé entre la partie pied (31) et le saillant de retenue (11) des languettes de retenue (28).

15. Lampe fluorescente selon une ou plusieurs des revendications précédentes, caractérisée par le fait que les saillants de retenue (11) sont munis, en leur surface située du côté corps-enveloppe, de rampes obliques pour l'accostage du renflement du corps-enveloppe (1).

16. Lampe fluorescente selon revendication 15, caractérisée par le fait que les saillants de retenue (11) présentent en coupe une forme en V dont l'arête (33) est dirigée vers l'extérieur, sensiblement radialement par rapport à l'axe (6) de la lampe.

17. Lampe fluorescente selon revendication 16, caractérisée par le fait que les branches du V forment entre elles un angle d'environ 90°.

18. Lampe fluorescente selon une ou plusieurs des revendications précédentes, caractérisée par le fait que les saillants de retenue (11) viennent en prise avec le corps-enveloppe (1) dans la région arquée entre étranglement (12) et douille (16).

19. Lampe fluorescente selon une ou plusieurs des revendications précédentes, caractérisée par un nombre impair de saillants de retenue (11), ceux-ci étant notamment au nombre de trois et étant régulièrement répartis sur le pourtour de l'adaptateur (2).

20. Lampe fluorescente selon une ou plusieurs des revendications précédentes, caractérisée par le fait que les languettes de retenue (28) et les saillants d'appui (24) sont répartis régulièrement, en alternat mutuel, sur le pourtour de l'adaptateur.

21. Lampe fluorescente selon une ou plusieurs des revendications précédentes, caractérisée par un collage obturant entre l'embase (3) et l'adaptateur et/ou le corps-enveloppe (1).

22. Lampe fluorescente selon une ou plusieurs des revendications précédentes, caractérisée par le fait que la partie du corps-enveloppe (1) située à l'extérieur de l'embase (3) est courbée de manière à avoir un aspect sensiblement sphérique, son plus grand diamètre (13) étant supérieur au diamètre maximal (14) de l'embase (3).

Fig.1

## Fig.2

Fig.3

Fig.4